Europäisches Patentamt

European Patent Office

Office européen des brevets

(19)

(11) **EP 1 431 880 A1**

(12) **DEMANDE DE BREVET EUROPEEN**

(43) Date de publication:
**23.06.2004 Bulletin 2004/26**

(51) Int Cl.⁷: **G06F 17/18**

(21) Numéro de dépôt: **03293122.2**

(22) Date de dépôt: **12.12.2003**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK** | (74) Mandataire: **Maillet, Alain**<br>**Cabinet le Guen & Maillet,**<br>**5, Place Newquay,**<br>**B.P. 70250**<br>**35802 Dinard Cedex (FR)** |
| (30) Priorité: **19.12.2002 FR 0216733** | Remarques:<br>Une requête en rectification du tableau 4 a été présentée conformément à la règle 88 CBE. Il est statué sur cette requête au cours de la procédure engagée devant la division d'examen (Directives relatives à l'examen pratiqué à l'OEB, A-V, 3.). |
| (71) Demandeur: **FRANCE TELECOM SA**<br>**75015 Paris (FR)** | |
| (72) Inventeur: **Boulle, Marc**<br>**22730 Tregastel (FR)** | |

(54) **Méthode de discrétisation/groupage d'un attribut source ou d'un groupe attributs source d'une base de données**

(57) La présente invention concerne une méthode de discrétisation/groupage d'un attribut source ou d'un groupe attributs source d'une base de données contenant une population d'individus dans le but notamment de prédire des modalités d'un attribut cible donné. Ladite méthode comporte les étapes suivantes de :

a) Partition desdites modalités dudit attribut source ou dudit groupe d'attribut en régions élémentaires,
b) Evaluation pour chaque couple de régions élémentaires, d'un critère de fusion,
c) Recherche, parmi l'ensemble des couples de régions élémentaires fusionnables, du couple de régions élémentaires dont le critère de fusion serait optimisée,
e) Arrêt de la méthode s'il n'existe pas de régions élémentaires dont la fusion aurait pour conséquence d'améliorer ledit critère de fusion,
f) sinon fusion et réitération des étapes b) à e).

Selon la présente invention, elle comprend en outre une étape d) entre les étapes c) et e) de saut direct à l'étape f) tant que la valeur d'une variable d'appréciation de la fusion considérée n'est pas comprise dans une zone de valeurs atypiques prédéterminée.

Fig. unique

## Description

La présente invention concerne une méthode de discrétisation/groupage d'un attribut source ou d'un groupe attributs source d'une base de données contenant une population d'individus dans le but notamment de prédire des modalités d'un attribut cible donné. L'invention trouve particulièrement application dans l'exploitation statistique des données, notamment dans le domaine de l'apprentissage supervisé.

L'analyse statistique des données (encore appelée «data mining ») a pris un essor considérable ces dernières années avec l'extension du commerce électronique et l'apparition de très grandes bases de données. Le data mining vise de manière générale à explorer, classifier et extraire des règles d'associations sous-jacentes au sein d'une base de données. Il est notamment utilisé pour construire des modèles de classification ou de prédiction. La classification permet d'identifier au sein de la base de données des catégories à partir de combinaisons d'attributs, puis de ranger les données en fonction de ces catégories.

De manière générale, les valeurs (encore appelées modalités) prises par un attribut peuvent être numériques (par exemple un montant d'achats) ou symbolique (par exemple une catégorie de consommation). On parle dans le premier cas d'attribut numérique et dans le second cas d'attribut symbolique.

Certaines méthodes de data mining requièrent une « discrétisation » des attributs numériques. On entend ici par discrétisation d'un attribut numérique un découpage du domaine des valeurs prises par un attribut en un nombre fini d'intervalles. Si le domaine en question est une plage de valeurs continues la discrétisation se traduira par une quantification de cette plage. Si ce domaine est déjà constitué de valeurs discrètes ordonnées, la discrétisation aura pour fonction de regrouper ces valeurs en groupes de valeurs consécutives.

La discrétisation des attributs numériques a été largement traitée dans la littérature. On en trouvera par exemple une description dans l'ouvrage de Zighed et al. intitulé « Graphes d'induction » publié chez HERMES Science Publications.

On distingue deux types de méthodes de discrétisation : les méthodes descendantes et les méthodes ascendantes. Les méthodes descendantes partent de l'intervalle complet à discrétiser et cherche le meilleur point de coupure de l'intervalle en optimisant un critère prédéterminé. Les méthodes ascendantes partent d'intervalles élémentaires et cherchent la meilleure fusion de deux intervalles adjacents en optimisant un critère prédéterminé. Dans les deux cas, elles sont appliquées itérativement jusqu'à ce qu'un critère d'arrêt soit satisfait.

La présente invention concerne plus particulièrement une méthode de discrétisation ascendante basée sur l'optimisation globale du critère de $\chi^2$.

Une méthode de discrétisation ascendante utilisant le critère du $\chi^2$ est connue dans la littérature sous le nom de ChiMerge. Elle est par exemple décrite dans le document intitulé "Discretization of Numeric Attributes" publié dans PROCEEDINGS TENTH NATIONAL CONFERENCE ON ARTIFICIAL INTELLIGENCE, SAN JOSE, CA, USA, 12-16 JULY 1992, pages 123-128 au nom de KERBE R.

On rappellera tout d'abord que le critère du $\chi^2$ permet sous certaines hypothèses de déterminer le degré d'indépendance de deux variables aléatoires.

Soit S un attribut source et T un attribut cible. On supposera pour fixer les idées que S présente cinq modalités a,b,c,d,e et T trois modalités A,B,C. Le Tableau 1 montre le tableau de contingence des variables S et T avec les conventions suivantes :

$n_{ij}$ est le nombre d'individus observés pour la $i^{ème}$ modalité de la variable S et la $j^{ème}$ modalité de la variable T. $n_{ij}$ est encore appelé effectif observé de la case $(i,j)$;
$n_{i.}$ est le nombre total d'individus pour la $i^{ème}$ modalité de la variable S . $n_{i.}$ est encore appelé effectif observé de la ligne $i$ ;
$n_{.j}$ est le nombre total d'individus pour la $j^{ème}$ modalité de la variable T. $n_{.j}$ est encore appelé effectif observé de la colonne $j$ ;

$N$ est le nombre total d'individus.

Tableau 1

| S/T | A | B | C | Total |
|---|---|---|---|---|
| a | $n_{11}$ | $n_{12}$ | $n_{13}$ | $n_{1.}$ |
| b | $n_{21}$ | $n_{22}$ | $n_{23}$ | $n_{2.}$ |
| c | $n_{31}$ | $n_{32}$ | $n_{33}$ | $n_{3.}$ |
| d | $n_{41}$ | $n_{42}$ | $n_{43}$ | $n_{4.}$ |

Tableau 1   (suite)

| S/T | A | B | C | Total |
|-----|-----|-----|-----|-----|
| e | $n_{51}$ | $n_{52}$ | $n_{53}$ | $n_{5.}$ |
| Total | $n_{.1}$ | $n_{.2}$ | $n_{.3}$ | $N$ |

De manière générale, on notera $I$ et $J$ respectivement le nombre de modalités de l'attribut S et le nombre de modalités de l'attribut T.

On définit l'effectif théorique $e_{ij}$ de la case ($i,j$) par $e_{ij}=\frac{n_{i.}n_{.j}}{N}$, représentant le nombre d'individus qui serait observé dans la case du tableau de contingence dans le cas de variables indépendantes. L'écart à l'indépendance des variables S et T est mesuré par :

$$\chi^2=\sum_{i=1}^{I}\sum_{j=1}^{J}\frac{(n_{ij}-e_{ij})^2}{e_{ij}} \tag{1}$$

Plus la valeur de $\chi^2$ est élevée, moins l'hypothèse d'indépendance des variables aléatoires S et T est probable. On parle par abus de langage de probabilité d'indépendance des variables.

Plus précisément $\chi^2$ est une variable aléatoire dont on peut montrer que la densité suit une loi dite du $\chi^2$ à ($I$-1).($J$-1) degrés de liberté. La loi du $\chi^2$ est celle suivie par une somme quadratique de valeurs aléatoires normales centrées. Elle a de fait l'expression d'une loi $\gamma$ et tend vers une loi gaussienne lorsque le nombre de degrés de liberté est élevé.

Par exemple si $I$=5 et $J$=3, le nombre de degrés de liberté vaut 8. Si la valeur de $\chi^2$ calculée par (1) vaut 20, la loi du $\chi^2$ à 8 degrés de liberté donne une probabilité d'indépendance de S et T de 1 %.

Ayant montré que le critère du $\chi^2$ permet de déterminer le degré d'indépendance de deux variables aléatoires, nous présenterons maintenant la méthode de discrétisation ascendante par optimisation du critère du $\chi^2$ que constitue la méthode dite ChiMerge.

Nous nous plaçons dans le cas général d'un attribut source S à $I$ modalités et d'un attribut T à $J$ modalités. La méthode ChiMerge considère seulement deux lignes consécutives $i$ et $i+l$ du tableau de contingence. Soit $q'_1,q'_2,..,q'_J$ la distribution locale (c'est-à-dire dans le contexte local des lignes consécutives $i$ et $i+l$) de probabilité des modalités pour l'attribut cible T. Si $n_{i.}$ est l'effectif de la ligne $i$ et $n_{i+l.}$ est l'effectif de la ligne $i+1$, les effectifs observés et théoriques de la ligne $i$ s'expriment respectivement par $n_{ij}=a_{ij}n_{i.}$ et $e_{ij}=q'_jn_{i.}$ où les $a_{ij}$ représentent les proportions d'effectifs observés pour la ligne $i$. De même, les effectifs observés et théoriques de la ligne $i+1$ s'expriment respectivement par $n_{i+1,j}=a_{i+1,j}n_{i+1,.}$ et $e_{i+1,j}=q'_jn_{i+1,.}$ où les $a_{i+1,j}$ représentent les proportions observées de modalités de T pour la ligne $i$+1. La distribution locale de probabilité $q'_1,q'_2,..q'_J$ des modalités de l'attribut cible peut être exprimée par :

$$q'_j=\frac{a_{ij}n_{i.}+a_{i+1,j}n_{i+1,.}}{n_{i.}+n_{i+1,.}} \tag{2}$$

Selon la méthode ChiMerge, on calcule la valeur du $\chi^2$ pour les lignes $i$ et $i$+1, soit, en tenant compte du fait que

$$\sum_{j=1}^{J}q'_j=\sum_{j=1}^{J}a_{ij}=1 :$$

$$\chi^2_{i,i+1}=n_{i.}\left(\sum_{j=1}^{J}\frac{a_{ij}^2}{q'_j}-1\right)+n_{i+1,.}\left(\sum_{j=1}^{J}\frac{a_{i+1,j}^2}{q'_j}-1\right) \tag{3}$$

soit encore après transformation :

$$\chi^2_{i,i+1}=\frac{n_{i.}\,n_{i+1,.}}{n_{i.}+n_{i+1,.}}\sum_{j=1}^{J}\frac{\left(a_{ij}-a_{i+1,j}\right)^2}{q'_j}\tag{4}$$

$\chi^2_{i,j+1}$ est une variable aléatoire suivant une loi du $\chi^2$ à $J$ -1 degrés de liberté. La méthode ChiMerge propose de fusionner les lignes $i$ et $i$+1 si :

$$prob(\chi^2_{i,i+1}\,,J\text{-}1)\leq \text{Pr}ob(\alpha,K)=p_{Th}\tag{5}$$

où $prob(\alpha,K)$ désigne la probabilité que $\chi^2 \geq\alpha$ pour la loi du $\chi^2$ à $K$ degrés de libertés et $p_{Th}$ est une valeur de seuil prédéterminée paramétrant la méthode. En pratique, la valeur $prob(\alpha,K)$ est obtenue à partir d'une table classique du $\chi^2$ donnant la valeur de $\alpha$ en fonction de $prob(\alpha,K)$ et de $K$.

La condition (5) exprime que la probabilité d'indépendance de S et T au vu des deux lignes considérées est inférieure à une valeur de seuil. La fusion de lignes consécutives est itérée tant que la condition (5) est vérifiée. La fusion de deux lignes entraîne le regroupement de leurs modalités et la sommation de leurs effectifs. Par exemple dans le cas d'un attribut numérique à valeurs continues on a avant fusion :

Tableau 2

| $[s_i,s_{i+1}[$ | $n_{i,1}$ | $n_{i+1,2}$ | .... | $n_{i,J}$ | $n_{i,.}$ |
|---|---|---|---|---|---|
| $[S_{i+1},S_{i+2}[$ | $n_{i+1,1}$ | $n_{i+1,2}$ | .... | $n_{i+1,J}$ | $n_{i+1,.}$ |

et après fusion :

Tableau 3

| $[s_i,s_{i+2}[$ | $n_{i,1}+n_{i+1,1}$ | $n_{i+1,2}+ n_{i+1,2}$ | .... | $n_{i,J} + n_{i+1,J}$ | $n_{i,.} + n_{i+1,.}$ |
|---|---|---|---|---|---|

Dans le document de brevet FR-A-2 825 168, est proposée une méthode qui est un perfectionnement à la méthode qui vient d'être décrite notamment en ce qu'elle permet de s'affranchir du problème, dans la méthode Chi-Merge, du choix du paramètre $p_{Th}$ qui ne doit pas être trop élevé sous peine de fusionner toutes les lignes ni trop faible sous peine de ne fusionner aucune paire.

Supposons le cas d'un attribut S numérique mono-dimensionnel à valeurs continues. Après avoir ordonné les modalités de S, l'ensemble de ces modalités peut être découpé en intervalles élémentaires $S_i=[s_i,s_{i+1}[$, $i$=1,...,$I$. Nous souhaitons évaluer le degré d'indépendance de cet attribut avec un attribut cible T de modalités $T_j$, $j$=1,...,$J$. On peut représenter le tableau de contingence :

| S/T | $T_1$ | $T_2$ | ... | $T_J$ | Total |
|---|---|---|---|---|---|
| $S_1$ | $n_{1,1}$ | $n_{1,2}$ | ... | $n_{1,J}$ | $n_{1,.}$ |
| $\Lambda$ | $\Lambda$ | $\Lambda$ | $\Lambda$ | $\Lambda$ | $\Lambda$ |
| $S_i$ | $n_{i,1}$ | $n_{i,2}$ | ... | $n_{i,J}$ | $n_{i,.}$ |
| $S_{i+1}$ | $n_{i+1,1}$ | $n_{i+1,2}$ | ... | $n_{i+1,J}$ | $n_{i+1,.}$ |
| $\Lambda$ | $\Lambda$ | $\Lambda$ | $\Lambda$ | $\Lambda$ | $\Lambda$ |
| $S_I$ | $n_{I,1}$ | $n_{I,2}$ | ... | $n_{I,J}$ | $n_{I,.}$ |
| Total | $n_{.,1}$ | $n_{.,2}$ | ... | $n_{.,J}$ | $N$ |

Tableau 4

D'après (1) la valeur du $\chi^2$ sur l'ensemble du tableau peut s'exprimer par :

$$\chi^2=\sum_{i=1}^{I}\sum_{j=1}^{J}\frac{(n_{ij}-e_{ij})^2}{e_{ij}} \tag{6}$$

Soit encore en notant $q_1,q_2,..,q_J$ la distribution de probabilité des modalités de l'attribut cible et $a_{ij}$ les proportions d'effectifs observés pour la ligne $i$ et en remarquant que $e_{ij}=q_jn_{i,.}$ , $n_{ij}=a_{ij}n_{i,.}$ et

$$\sum_{j=1}^{J}q_j=\sum_{j=1}^{J}a_{ij}=1 :$$

$$\chi^2=\sum_{i=1}^{I}n_{i,.}\sum_{j=1}^{J}\left(\frac{a_{ij}^2}{q_j}-1\right)=\sum_{i=1}^{I}\chi_{(i)}^2 \tag{7}$$

où $\chi_{(i)}^2$ est la valeur du $\chi^2$ pour la ligne $i$. L'expression (7) signifie que le $\chi^2$ est additif par rapport aux lignes du tableau.

Après fusion de deux lignes consécutives $i$ et $i+1$, la valeur du $\chi^2$ est modifiée et cette nouvelle valeur, notée $\chi_{f(i,i+1)}^2$ peut donc s'écrire :

$$\chi_{f|i,i+1|}^2 = \chi^2+\Delta\chi_{|i,i+1|}^2 \tag{10}$$

où $\Delta\chi_{f(i,i+1)}^2$ est la variation du $\chi^2$ résultant de la fusion des lignes $i$ et $i+1$. On a montré que la valeur de $\Delta\chi_{f(i,i+1)}^2$ peut être calculée explicitement en fonction des proportions d'effectifs des lignes $i$ et $i+1$ :

$$\Delta\chi_{(i,i+1)}^2=-\left(\frac{n_{i,.}+n_{i+1,.}}{n_{i,.}n_{i+1,.}}\right)\sum_{j=1}^{J}\frac{(a_{ij}-a_{i+1,j})^2}{q_j} \tag{11}$$

La liste des valeurs de $\Delta\chi_{f(i,i+1)}^2$ est triée par valeurs décroissantes. Pour celle présentant la valeur la plus élevée, on teste l'inégalité suivante des probabilités d'indépendance de S et de T avant fusion et après fusion. On teste alors si :

$$prob\left(\chi_{f(i_0,i_0+1)}^2,(I-2)(J-1)\right)\leqslant prob\left(\chi^2,(I-1)(J-1)\right) \tag{12}$$

Si la condition (12) est vérifiée, on fusionne les lignes $i_0$ et $i_0+1$. En revanche, si la condition (12) n'est pas vérifiée, alors elle n'est vérifiée pour aucun indice $i$ par suite de la décroissance de $prob(\alpha,K)$ en fonction de $\alpha$. Le processus de fusion est alors arrêté.

Si les lignes $i_0$ et $i_0+1$ ont été fusionnées, on met à jour la liste des valeurs $\Delta\chi_{f(i,i+1)}^2$. On notera que cette mise à jour ne concerne en fait que les valeurs relatives aux lignes contiguës aux lignes fusionnées à savoir les lignes d'indices $i_0-1$ et $i_0+2$ avant fusion (si elles existent). Le processus de fusion est itéré tant que la condition (12) est satisfaite.

La méthode qui est décrite dans le document FR-A-2 825 168 conduit à une discrétisation *ad hoc* du domaine des modalités, c'est-à-dire à une discrétisation qui minimise l'indépendance entre l'attribut source et l'attribut cible sur l'ensemble du domaine. En effet, cette méthode de discrétisation permet de regrouper des intervalles adjacents ayant des comportements de prédiction similaires vis à vis de l'attribut cible, le regroupement étant arrêté lorsqu'il nuit à la qualité de prédiction, en d'autres termes lorsqu'il ne fait plus décroître la probabilité d'indépendance des attributs.

On obtient par fusions successives un tableau de contingence dont le nombre de lignes se réduit et dont les effectifs par case augmentent.

Cette méthode pose néanmoins le problème dû à un phénomène dit de "sur-apprentissage" par lequel on conclut indûment à une dépendance des attributs. Cela correspond à une généralisation abusive de caractéristiques présentes dans l'échantillon étudié uniquement en raison de fluctuations statistiques. Toujours dans le document FR-A-2 825 168, il a été proposé, pour résoudre ce problème, d'adapter la méthode de discrétisation décrite ci-dessus de la manière suivante : on accorde d'abord la priorité aux fusions de lignes vérifiant (12) qui permettent de vérifier un critère d'effectif minimum. Le critère d'effectif minimum pourra, par exemple, s'écrire pour la ligne $i_0$:

$$e_{i_0,j} \geq \log_2(10N), j=1,..,J \qquad (13)$$

Néanmoins, en dépit des bons résultats expérimentaux obtenus, il s'est avéré que dans certains cas le critère d'effectif minimum ci-dessus utilisé n'offrait pas une garantie suffisante. En particulier, la discrétisation d'attributs indépendants de l'attribut cible conduit à une discrétisation en plusieurs intervalles. Cela traduit un sur-apprentissage, d'autant plus important que la taille de l'échantillon d'apprentissage est élevée.

La méthode qui est donc exposé dans le document de brevet FR-A-2 825 168 ne permet donc pas de définir un niveau « plancher » en nombre d'intervalles correspondant aux attributs indépendants de l'attribut cible. Le choix empirique de l'effectif minimum n'est donc pas satisfaisant en présence d'attributs sans intérêt prédictif. De plus, il ne tient pas compte du nombre et de la distribution des modalités cibles.

Bien que l'introduction précédente soit en relation avec une méthode de discrétisation d'un attribut source numérique, la présente invention n'est pas limitée à une telle méthode. En effet, le problème que cherche à résoudre la présente invention qui est le problème de "sur-apprentissage" mentionné ci-dessus est tout à fait général et concerne également les méthodes de groupage des modalités d'un attribut source lorsque lesdites modalités ne sont pas continues mais discrètes. Lorsque les modalités sont continues, elles peuvent être partitionnées en intervalles élémentaires alors que lorsqu'elles sont discrètes, elles sont partitionnées en groupes. Il concerne également des méthodes de discrétisation ou de groupage de groupe d'attributs source, par exemple au nombre de k, qui peuvent alors être considérées comme des méthodes de discrétisation ou de groupage en dimension k. Intervalles et groupes peuvent donc être de dimension k. Dans la suite de la description, ils seront appelés de manière générale "régions".

Par ailleurs, bien que cette introduction ou le reste de la description considère comme critère de fusion le critère de $\chi^2$ (essentiellement pour des commodités de description), on comprendra que la présente invention ne se limite pas à ce critère particulier.

Le but de la présente invention est donc de proposer un perfectionnement une méthode de discrétisation/ groupage d'un attribut source ou d'un groupe attributs source d'une base de données contenant une population d'individus dans le but notamment de prédire des modalités d'un attribut cible donné qui permettent d'éviter le phénomène de « sur-apprentissage » mentionné ci-dessus empêchant la détection des attributs sans intérêt prédictif.

A cet effet, et dans le cas tout à fait général, la présente invention concerne une méthode de discrétisation/ groupage d'un attribut source ou d'un groupe attributs source d'une base de données contenant une population d'individus dans le but notamment de prédire des modalités d'un attribut cible donné, ladite méthode comportant les étapes suivantes de :

a) Partition desdites modalités dudit attribut source ou dudit groupe d'attribut en régions élémentaires,
b) Evaluation pour chaque couple de régions élémentaires, d'un critère de fusion,
c) Recherche, parmi l'ensemble des couples de régions élémentaires fusionnables, du couple de régions élémentaires dont ledit critère de fusion serait optimisée,
e) Arrêt de la méthode s'il n'existe pas de régions élémentaires dont la fusion aurait pour conséquence d'améliorer ledit critère de fusion,
f) sinon fusion et réitération des étapes b) à e).

En vue de résoudre le problème mentionné ci-dessus, cette méthode est caractérisée en ce qu'elle comprend en outre une étape d) entre les étapes c) et e) de saut direct à l'étape f) tant que la valeur d'une variable d'appréciation de la fusion considérée, ladite variable d'appréciation caractérisant le comportement dudit critère de fusion, n'est pas comprise dans une zone de valeurs atypiques prédéterminée.

Selon une autre caractéristique de la présente invention, ladite zone de valeurs atypiques prédéterminée est telle que pour un attribut cible indépendant dudit attribut source ou dudit groupe attributs source, la valeur de ladite variable de fusion ne soit pas comprise dans ladite zone avec une probabilité p prédéterminée.

La présente invention concerne également en particulier une méthode de discrétisation d'un attribut source d'une base de données contenant une population d'individus dans le but notamment de prédire des modalités d'un attribut cible donné, ladite méthode comportant les étapes suivantes de :

a) Partition desdites modalités de l'attribut source en intervalles élémentaires deux à deux adjacents,

b) Evaluation pour chaque couple d'intervalles élémentaires adjacents dudit ensemble, la valeur du $\chi^2$ du tableau de contingence après une éventuelle fusion dudit couple,

c) Recherche, parmi l'ensemble des couples d'intervalles élémentaires fusionnables, du couple d'intervalles élémentaires dont la fusion maximiserait la valeur de $\chi^2$,

e) Arrêt de la méthode s'il n'existe pas d'intervalles élémentaires permettant de diminuer la probabilité d'indépendance,

f) sinon fusion et réitération des étapes b) à e).

Selon une caractéristique de cette méthode, elle comprend en outre une étape d) entre les étapes c) et e) de saut direct à l'étape f tant que la valeur $\Delta\chi^2$ de la variation de la valeur du $\chi^2$ avant et après fusion est, en valeur absolue, inférieure à une valeur seuil prédéterminée Max$\Delta\chi^2$.

Selon une autre caractéristique de l'invention, ladite valeur seuil prédéterminée Max$\Delta\chi^2$ est telle que pour un attribut cible indépendant de l'attribut source la valeur $\Delta\chi^2$ de la variation de la valeur du $\chi^2$ avant et après fusion soit toujours inférieure à ladite valeur Max$\Delta\chi^2$ avec une probabilité p prédéterminée.

Selon une autre caractéristique de l'invention, ladite valeur seuil prédéterminée Max$\Delta\chi^2$ est égale à la fonction du $\chi^2$ de degré de liberté égale au nombre J de modalités de l'attribut cible moins un pour une probabilité p à la puissance 1/N où N est la taille de l'échantillon de la partie de la base de données sur laquelle est appliquée ladite méthode de discrétisation :

$$Max\Delta\chi^2 = Inv\chi^2_{J-1}(p^{1/N})$$

où $Inv\chi^2$ est la fonction qui donne la valeur du $\chi^2$ en fonction d'une probabilité p donnée.

Selon une autre caractéristique de l'invention, ladite méthode comporte une étape de vérification que l'effectif d'un attribut source pour des modalités dans un intervalle donné pour chaque attribut cible est supérieur à une valeur prédéterminée, et si tel n'est pas le cas, mettre en oeuvre la fusion dudit intervalle avec un intervalle adjacent.

La présent invention concerne encore en particulier une méthode de groupage d'un attribut de source d'une base de données contenant une population d'individus dans le but notamment de prédire des modalités d'un attribut cible donné, ladite méthode comportant les étapes suivantes de :

a) Partition desdites modalités de l'attribut source en une pluralité de groupes,

b) Evaluation pour chaque couple de groupes dudit ensemble, la valeur du $\chi^2$ du tableau de contingence après une éventuelle fusion dudit couple,

c) Recherche, parmi l'ensemble des couples de groupes fusionnables, du couple de groupes dont la fusion maximiserait la valeur de $\chi^2$,

e) Arrêt de la méthode s'il n'existe pas de fusions de groupes permettant de diminuer la probabilité d'indépendance,

f) sinon fusion et réitération des étapes b) à e).

Selon une caractéristique de l'invention, cette méthode comprend en outre une étape d) entre les étapes c) et e) de saut direct à l'étape f) tant que la valeur $\Delta\chi^2$ de la variation de la valeur du $\chi^2$ avant et après fusion est, en valeur absolue, inférieure à une valeur seuil prédéterminée Max$\Delta\chi^2$.

Selon une autre caractéristique de l'invention, ladite valeur seuil prédéterminée Max$\Delta\chi^2$ est telle que pour un attribut cible indépendant de l'attribut source la valeur $\Delta\chi^2$ de la variation de la valeur du $\chi^2$ avant et après fusion soit toujours inférieure à ladite valeur Max$\Delta\chi^2$ avec une probabilité p prédéterminée.

Selon une autre caractéristique de l'invention, pour établir la valeur seuil prédéterminée Max$\Delta\chi^2$, elle consiste à utiliser une table de valeurs préalablement calculée de valeurs de moyenne et d'écart type en fonction du nombre de modalités de l'attribut source et du nombre de modalités des attributs cibles, à déterminer par interpolation linéaire à partir de ladite table de valeurs la moyenne et l'écart type du Max$\Delta\chi^2$ correspondant aux attributs à grouper, puis à déterminer en utilisant la loi normale inverse la valeur seuil prédéterminée Max$\Delta\chi^2$ correspondant qui ne sera pas avec une probabilité p.

Selon une autre caractéristique de l'invention, pour deux modalités cibles, la moyenne du $Max\Delta\chi^2$ est asymptotiquement proportionnelle à $2I/\pi$ où I est le nombre de modalités sources.

Selon une autre caractéristique de l'invention, pour deux modalités sources, la loi du $Max\Delta\chi^2$ est la loi du $\chi^2$ à J-1 degrés de liberté, J étant le nombre de modalités cibles.

Selon une autre caractéristique de l'invention, ladite méthode comporte une étape préalable de vérification que l'effectif d'un attribut source pour des modalités dans un groupe donné pour chaque attribut cible est supérieur à une valeur prédéterminée, et si tel n'est pas le cas, mettre en oeuvre une fusion dudit groupe avec un groupe spécifique, ledit groupe fusionné formant alors de nouveau ledit groupe spécifique.

La présente invention concerne également en particulier une méthode de discrétisation en dimension k d'un groupe de k attributs sources continus d'une base de données contenant une population d'individus, dans le but notamment de prédire les modalités d'un attribut cible donné, ladite méthode comportant les étapes suivantes de :

a) Partition desdites modalités du groupe des k attributs sources en des régions élémentaires de dimension k,
b) Evaluation pour chaque couple de régions élémentaires adjacentes, la valeur du $\chi^2$ du tableau de contingence après une éventuelle fusion dudit couple,
c) Recherche, parmi l'ensemble des couples de régions fusionnables, du couple de régions dont la fusion maximiserait la valeur de $\chi^2$,
e) Arrêt de la méthode s'il n'existe pas d'ensemble d'intervalles permettant de diminuer la probabilité d'indépendance,
f) sinon fusion et réitération des étapes b) à e).

Elle est caractérisée en ce qu'elle comprend en outre une étape d) entre les étapes c) et e) de saut direct à l'étape f) tant que la valeur $\Delta\chi^2$ de la variation de la valeur du $\chi^2$ avant et après fusion est, en valeur absolue, inférieure à une valeur seuil prédéterminée $Max\Delta\chi^2$.

Enfin, elle concerne une méthode de groupage en dimension k d'un groupe de k attributs sources discrets d'une base de données contenant une population d'individus, dans le but notamment de prédire les modalités d'un attribut cible donné, ladite méthode comportant les étapes suivantes de :

a) Partition desdites modalités du groupe des k attributs source en une pluralité de groupes,
b) Evaluation pour chaque couple de groupes, la valeur du $\chi^2$ du tableau de contingence après une éventuelle fusion dudit couple,
c) Recherche, parmi l'ensemble des couples de groupes fusionnables, du couple de groupes dont la fusion maximiserait la valeur de $\chi^2$,
e) Arrêt de la méthode s'il n'existe pas de fusions de groupes permettant de diminuer la probabilité d'indépendance,
f) sinon réitération des étapes b) à e).

Elle est alors caractérisée en ce qu'elle comprend en outre une étape d) entre les étapes c) et e) de saut direct à l'étape f) tant que la valeur $\Delta\chi^2$ de la variation de la valeur du $\chi^2$ avant et après fusion est, en valeur absolue, inférieure à une valeur seuil prédéterminée $Max\Delta\chi^2$.

Les caractéristiques de l'invention mentionnées ci-dessus, ainsi que d'autres, apparaîtront plus clairement à la lecture de la description suivante d'un exemple de réalisation, ladite description étant faite en relation avec la Fig. unique est un organigramme montrant les différentes étapes mises en oeuvre par la méthode de discrétisation ou une méthode de groupage selon la présente invention.

Comme déjà mentionné ci-dessus, la présente description va, pour des raisons de commodités, considérer comme :

critère de fusion, le critère de $\chi^2$,
amélioration du critère de fusion, la diminution de la probabilité d'indépendance,
variable d'appréciation d'une fusion, la valeur de la variation $\Delta\chi^2$ de la valeur du $\chi^2$ avant et après ladite fusion,
zone de valeurs atypiques, les valeurs de la variation $\Delta\chi^2$ supérieures à une valeur seuil prédéterminée $Max\Delta\chi^2$.

Mais on comprendra que la présente invention ne se limite pas à ces cas particuliers.

Dans un premier temps, on va considérer, dans ce cadre limitatif exposé ci-dessus, une méthode de discrétisation d'un attribut source telle que celle qui est décrite dans le document de brevet FR-A-2 825 168. Dans ce document, on envisage toutes les fusions possibles d'intervalles, on choisit la meilleure fusion, et si le critère d'arrêt n'est pas atteint, on effectue cette fusion et on continue.

Selon ce mode de réalisation de la présente invention, on va de même étudier la loi du $\Delta\chi^2_{i,i+1}$ (variation de la valeur du $\chi^2$ lors de la fusion de deux intervalles i et i+1). Lors du déroulement de la méthode, un grand nombre de fusions sont envisagées, et à chaque étape, on choisit la meilleure de toutes ces fusions en optimisant le critère du $\chi^2$, ou ce qui est équivalente en optimisant le critère du $\Delta\chi^2$ (le $\chi^2$ de départ étant fixé) d'une manière équivalent à ce qui est décrit dans le document mentionné ci-dessus. En plus d'une condition d'arrêt sur les probabilités d'indépendance entre attribut source et attribut cible avant et après, la méthode selon la présente invention prévoit de continuer les fusions tant que la valeur du $\Delta\chi^2_{i0,i0+1}$ n'est pas assez importante (On rappelle ici que i0 et i0+1 sont respectivement les indices des intervalles dont la valeur du $\Delta\chi^2_{i0,i0+1}$ est la plus élevée).

En d'autres termes, on va effectuer un test sur cette valeur du $\Delta\chi^2_{i0,i0+1}$ la plus élevée, ou plus exactement sa valeur absolue, en la comparant avec une valeur maximale notée $Max\Delta\chi^2$. Si cette valeur absolue de $\Delta\chi^2_{i0,i0+1}$ est inférieure à la valeur $Max\Delta\chi^2$, alors le processus de fusion des intervalles est forcé quoi qu'il arrive (en ignorant les autres conditions d'arrêt).

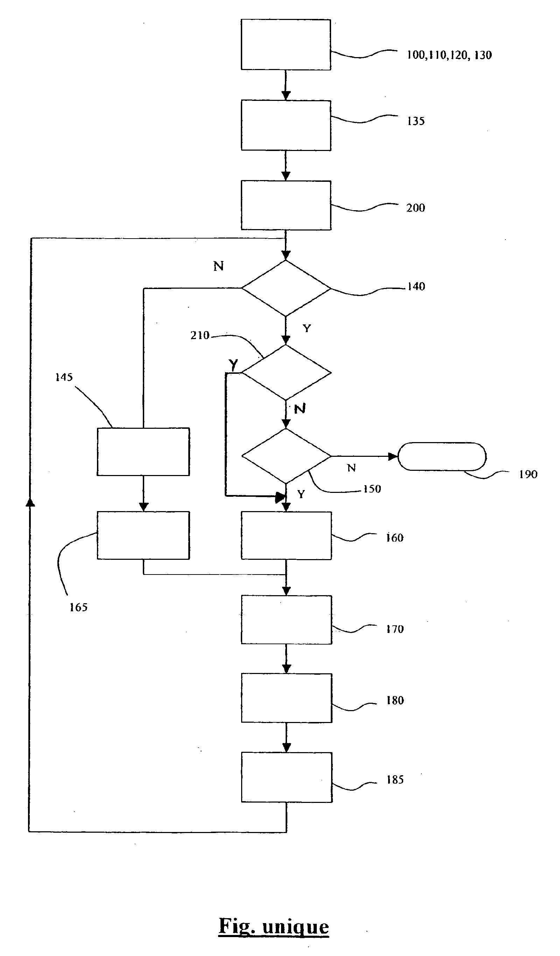

On a représenté à la Fig. 1 un organigramme d'un exemple de mise en oeuvre d'une méthode de discrétisation selon la présente invention.

L'algorithme débute par une phase d'initialisation 100, 110, 120, 130 (les références sont identiques à celles qui sont utilisées dans le document de brevet FR-A-2 825 168 dans laquelle on réalise une partition du domaine des modalités de l'attribut source en intervalles élémentaires ordonnés (étape 100), on calcule la valeur du $\chi^2$ résultant ainsi que les valeurs $\chi^2_{(i)}$ pour les $I$ lignes du tableau de contingnece (étape 110), on calcule les valeurs $\Delta\chi^2_{(i,i+1)}$ des valeurs $\chi^2_{(i)}$ (étape 120) et on trie ces valeurs $\Delta\chi^2_{(i,i+1)}$ par valeurs décroissantes ( étape 130).

On notera que la première valeur $\Delta\chi^2_{i0,i0+1}$ est celle qui est la plus élevée en valeur relative mais comme les valeurs $\Delta\chi^2_{i,i+1}$ sont toujours négatives, elle est celle dont la valeur absolue est la plus faible. Cette valeur correspond à la fusion de deux intervalles adjacents d'indices i0 et i0+1 pour laquelle la valeur absolue de $\Delta\chi^2_{i0,i0+1}$ est minimisée ou pour laquelle la valeur du $\chi^2_{fi0,i0+1}$ après fusion des intervalles i0 et i0+1 est maximisée.

A l'étape 200, étape nouvelle par rapport à ce qui est décrit dans le document FR-A-2 825 168, on initialise la valeur $Max\Delta\chi^2$. Il pourrait s'agir d'une valeur constante prise une fois pour toute. Néanmoins, comme on le verra par la suite, cette valeur dépend des données à traiter si bien qu'à l'étape 200, c'est un calcul qui est effectué.

A l'étape 140, on teste si la condition d'effectif minimum dans chaque case du tableau de contingence est vérifiée. Il peut s'agir de vérifier que chaque case du tableau comporte un minimum d'effectif pour que le procédé de la présente invention puisse fonctionner correctement en se plaçant dans les conditions d'application du test du $\chi^2$. On comprendra qu'il ne s'agit pas ici, comme c'était le cas dans le cas dans le document de brevet FR-A-2 825 168 mentionné ci-dessus, de résoudre le problème de sur-apprentissage. En reprenant les notations ci-dessus, il s'agit ici de vérifier que :

$$n_{i,j} > n_{min} \text{ pour tout i et j}$$

où $n_{min}$ est le nombre d'effectif minimum. Ce nombre est par exemple de 5.

Dans le cas où la relation précédente est vérifiée, on passe directement au test 210. Dans la négative, on poursuit par l'étape 145.

A l'étape 145, on donne priorité aux couples d'intervalles dont l'une d'entre elles au moins a une case qui n'a pas atteint l'effectif minimum $n_{min}$ et à l'étape 165 l'on sélectionne parmi eux le couple d'intervalles $(i_0, i_0+1)$ dont la valeur $\Delta\chi^2_{i0,i0+1}$ est la plus élevée. Puis, on poursuit à l'étape 170.

A l'étape 210, étape nouvelle par rapport à ce qui est décrit dans le document FR-A-2 825 168, on teste si la valeur absolue du $\Delta\chi^2_{i0,i0+1}$ la plus élevée est inférieure à la valeur maximale notée $Max\Delta\chi^2$ déterminée à l'étape 200.

Si cette valeur absolue de $\Delta\chi^2_{i0,i0+1}$ est inférieure à la valeur $\text{Max}\Delta\chi^2$, alors on poursuit à l'étape 160 sinon on passe à l'étape 150.

A l'étape 150, on considère les intervalles i0 et i0+1 dont la valeur $\Delta\chi^2_{i0,i0+1}$ est la plus élevée et on teste si la probabilité d'indépendance entre attribut source et attribut cible après fusion de ces deux intervalles, notée

$$prob\left(\chi^2_{f(i0,i0+1)},(I-2)(J-1)\right),$$

est inférieure ou égale à la probabilité d'indépendance entre attribut source et attribut cible avant fusion des deux intervalles. On teste donc la relation suivante :

$$prob\left(\chi^2_{f(i0,i0+1)},(I-2)(J-1)\right) \leq prob\left(\chi_2,(I-1)(J-1)\right)$$

Si tel est le cas, on sélectionne (étape 160) le couple d'intervalles i0 et i0+1 comme étant à fusionner et l'on poursuit à l'étape 170. Par contre, si tel n'est pas le cas, le processus se termine en 190.

A l'étape 170, les intervalles d'indice $i_0$ et $i_0$+1 sont fusionnés. La nouvelle valeur de $\chi^2_{(i_0)}$ est ensuite calculée en 180 ainsi que les nouvelles valeurs de $\Delta\chi^2_{(i_0-1,i_0)}$ et $\Delta\chi^2_{(i_0,i_0+1)}$ pour les intervalles adjacents, s'ils existent. En 185, la liste des valeurs $\Delta\chi^2_{(i,i+1)}$ est mise à jour: les anciennes valeurs $\Delta\chi^2_{(i_0-1,i_0)}$ et $\Delta\chi^2_{(i_0,i_0+1)}$ sont supprimées et les nouvelles valeurs sont stockées. La liste des valeurs $\Delta\chi^2_{(i,i+1)}$ est avantageusement organisée sous forme d'arbre binaire de recherche équilibré permettant de gérer les insertions/suppressions tout en maintenant la relation d'ordre dans la liste. Ainsi, il n'est pas nécessaire de trier complètement la liste à chaque étape. La liste des drapeaux est également mise à jour. Après la mise à jour, le processus retourne à l'étape de test 140.

On décrit ci-dessous des modes de réalisation de moyens qui permettent de déterminer la valeur de $\text{Max}\Delta\chi^2$. On comprendra que ces moyens sont mis en oeuvre dans la boîte 200 de la Fig. 1.

Pour ce faire, on va partir de la constatation que, pour un attribut source et un attribut cible qui sont indépendants, le résultat souhaité est qu'à l'issue du processus de discrétisation, il ne reste plus qu'un seul intervalle, signifiant ainsi que l'attribut source (pris isolément) ne contient pas d'information sur l'attribut cible. Dans ce cas, on peut pour une probabilité p donnée déterminer une valeur $\text{Max}\Delta\chi^2(p)$ qui ne sera pas dépassée avec une probabilité p.

Ainsi, à l'étape 200, on détermine $\text{Max}\Delta\chi^2$ comme étant égal à $\text{Max}\Delta\chi^2(p)$, avec p une probabilité dont la valeur est prédéterminée.

On assure ainsi le comportement désiré avec une probabilité p. Dans le cas de deux attributs quelconques (non nécessairement indépendants), cette fiabilisation de la méthode nous permet d'affirmer que si l'algorithme produit une discrétisation contenant de l'information (au moins deux intervalles), il y a une probabilité supérieure à p pour que l'attribut descriptif soit réellement porteur d'information sur l'attribut à prédire.

On a cherché à déterminer théoriquement la relation qui existe entre la valeur de $\text{Max}\Delta\chi^2$ et la probabilité p. Pour ce faire, on a étudié la loi du Delta $\Delta\chi^2_{(i,i+1)}$ (variation de la valeur du $\chi^2$ lors de la fusion de deux intervalles de rang i et i+1) dans le cas de deux attributs indépendants. Dans ce cas, il faut continuer les fusions jusqu'à ce qu'il ne reste plus qu'un seul groupe final qui est en fait l'échantillon initial. Il faut donc que la plus grande valeur $\Delta\chi^2_{(i_0,i_0+1)}$ rencontré au cours du processus soit accepté. On va essayer d'estimer cette plus grande valeur au cours du déroulement du processus de discrétisation, et imposer que les fusions soient continuées tant que ce seuil n'est pas atteint, lequel sera donc la valeur recherchée de $\text{Max}\Delta\chi^2$.

Pour deux attributs indépendants, la valeur du $\chi^2$ suit une loi de probabilité dont l'espérance et la variance sont liées de la manière suivante :

$$E\left(\chi^2\right)=k$$

$$Var(\chi_2)=2k+\frac{1}{N}\left(\sum 1/q_i-k^2-4k-1\right)$$

On a également pu montré (voir précédemment la relation 11) que la variation induite du $\chi^2$ suite à la fusion de deux intervalles d'effectifs respectifs n et n' et de proportions de modalités locales cibles respectivement égales à $p_j$ et $p'_j$ peut s'écrire sous la forme :

$$\Delta\chi^2=\chi^2_{après\_fusion}-\chi^2_{avant\_fusion}=-\left(\frac{nn'}{n+n'}\right)\sum_{j=1}^{J}\frac{(p_j-p'_j)^2}{P_j}$$

$P_j$ est la proportion globale de modalités de l'attribut cible de rang j.

On sait que cette variation est toujours négative, et n'est nulle que si les intervalles sont identiques ou ont exactement les mêmes proportions de modalités cibles. Ainsi, on sait que le $\chi^2$ d'un tableau de contingence ne peut que décroître suite à la fusion de deux lignes du tableau de contingence. Par la suite, on redéfinit le $\Delta\chi^2$ par sa valeur absolue pour ne manipuler que des grandeurs positives.

$$\Delta\chi^2=\frac{nn'}{n+n'}\sum_{j=1}^{J}\frac{(p_j-p'_j)^2}{P_j}$$

Le calcul de la fonction de répartition de $\Delta\chi^2$ est basé sur des lois binomiales discrètes, ce qui le rend difficile à évaluer pour des valeurs importantes de n. On va utiliser le théorème central limite pour approximer la loi du $\Delta\chi^2$ dans le cas où n=n'.

On fait la proposition suivante : pour un attribut source indépendant d'un attribut cible à J modalités, le $\Delta\chi^2$ résultant de la fusion de deux intervalles de même effectif n et n' suit asymptomatiquement une loi du $\chi^2$ à J-1 degrés de libertés.

On a pu montré que cette proposition est non seulement valable dans le cas de deux modalités cibles mais aussi dans les autres cas.

On peut remarquer que la loi du $\Delta\chi^2$ dépend du nombre de modalités de l'attribut cible, mais pas de leur distribution.

On va maintenant évaluer la statistique des fusions de la méthode selon la présente invention.

On remarque d'abord que lors d'une discrétisation « totale » jusqu'à un seul intervalle final, le nombre de fusions effectuées est environ égal à la taille N de l'échantillon.

On va dans un premier temps évaluer expérimentalement le comportement réel de l'algorithme et ainsi cette modélisation statistique simple de la méthode de la présente invention. L'expérimentation consiste à mettre en oeuvre la méthode de l'invention sur un échantillon comportant un attribut source continu indépendant de l'attribut cible et prenant des valeurs booléennes équi-distribuées. On effectue toutes les fusions possibles jusqu'à obtenir un intervalle terminal unique (les critères d'arrêt sont rendus inactifs) et on collecte la valeur de $\Delta\chi^2$ de chacune de ces fusions afin d'en tracer la fonction de répartition. On effectue cette expérimentation sur des échantillons de taille 100, 1000 et 10000, puis on compare les fonctions de répartion obtenues à la fonction de répartition théorique du $\Delta\chi^2$ de deux intervalles de même effectifs (loi du $\chi^2$ à un degré de liberté).

Cette expérimentation montre que la loi des $\Delta\chi^2$ résultant des différentes fusions effectuées lors de la mise en oeuvre de la méthode de l'invention ne dépend pas de la taille de l'échantillon, et est bien modélisée par la loi théorique du $\Delta\chi^2$ démontrée ci-dessus pour deux intervalles de même effectif. Selon un mode de réalisation de la présente invention, un seuil Max$\Delta\chi^2$ pour la mise en oeuvre de la méthode ci-dessus est tel que pour deux attributs source et cible indépendants, la méthode converge vers un seul groupe terminal avec une probabilité supérieure à p (p = 0,95 par exemple). Il faut donc que toutes les fusions envisagées soient acceptées, c'est-à-dire que toutes les valeurs de $\Delta\chi^2$ résultant des fusions envisagées soient inférieures au seuil Max$\Delta\chi^2$. En se basant sur la modélisation précédente où toutes les fusions sont indépendantes, la probabilité que toutes les fusions envisagées soit acceptées est égale à la probabilité qu'une fusion soit acceptée à la puissance N. On cherche donc Max$\Delta\chi^2$ tel que :

$$P(\Delta\chi_J^2 \leq Max\Delta\chi^2)^N \geq p$$

En passant par la loi du $\chi^2$ équivalente, on a :

$$P(\chi_{J-1}^2 \leq Max\Delta\chi^2) \geq p^{1/N}$$

Ce qui peut encore s'écrire :

$$Max\Delta\chi^2 = Inv\chi_{J-1}^2(p^{1/N})$$

où $Inv\chi^2$ est la fonction qui donne la valeur du $\chi^2$ en fonction d'une probabilité p donnée.

On a cherché à valider cette modélisation de la loi du $Max\Delta\chi^2$. Pour ce faire, on s'intéresse cette fois non plus à la distribution des valeurs du $\Delta\chi^2$ au cours de la mise en oeuvre de la méthode de l'invention, mais aux maxima de ces valeurs. Pour cela, on utilise des échantillons de deux attributs source et cible réellement indépendants comme précédemment et on collecte pour un grand nombre d'échantillons à discrétiser la valeur maximale des $\Delta\chi^2$ résultant des fusions d'intervalles opérées. On réalise cette expérimentation 1000 fois pour des échantillons de taille 100, 1000 et 10000 et 100000 et on trace les fonctions de répartition « empiriques » de $Max\Delta\chi^2$ pour chacune de ces tailles d'intervalles. On trace également sur les mêmes figures les fonctions de répartition théoriques obtenues avec la formule ci-dessus.

On a pu remarquer que les lois empiriques et les lois théoriques correspondantes ont des formes très similaires, quelle que soit la taille de l'échantillon. On a également pu remarquer que les valeurs théoriques constituent une borne supérieure des valeurs empiriques. Par conséquent, cette borne constitue une estimation assez fidèle des valeurs empiriques. On notera que bien que reposant sur des bases raisonnables, son comportement de borne supérieure n'a pu être vérifié qu'expérimentalement.

On a réalisé des expérimentations permettant d'évaluer la présente invention dans son premier mode de réalisation particulier.

Dans une première expérimentation, on a discrétisé un attribut source continu indépendant d'un attribut cible à prédire, pour des tailles d'échantillon de 100, 1000, 10000, 100000 et 100000. Pour chacune des tailles d'échantillon, on a répété cette expérimentation 1000 fois. On compte le nombre de cas où la discrétisation aboutit à un unique intervalle terminal, et dans les cas contraires de discrétisation multi-intervalles, on calcule la valeur moyenne du nombre d'intervalles. Le résultat de cette première expérimentation est montré dans le tableau ci-dessous.

| Taille d'échantillon | % sans discrétisation | Discrétisation multi-intervalles Nombre d'intervalles |
|---|---|---|
| 100 | 98,6% | 2,36 |
| 1000 | 98,7% | 3,00 |
| 10000 | 98,4% | 3,00 |
| 100000 | 97,2% | 3,00 |
| 1000000 | 95,6% | 3,00 |

On peut constater que la discrétisation d'un attribut indépendant de l'attribut cible aboutit dans 95% à 98% des cas à un unique intervalle terminal. On peut conclure, sur la base de cette expérimentation, la méthode selon la présente invention se comporte de manière conforme à ce qui est attendu, au moins dans le domaine des taille d'échantillon variant de 100 à 1000000.

On va montrer ci-dessous que la méthode qui vient d'être décrite en relation avec la Fig. 1 est non seulement applicable au problème de la discrétisation de données numériques comme cela a été montré ci-dessus mais également au problème du groupage des modalités d'attributs symboliques.

On rappelle que le problème du groupage des modalités d'un attribut symbolique consiste à partitionner l'ensemble des valeurs de l'attribut en un nombre fini de groupes identifiés chacun par un code. Ainsi, la plupart des modèles prédictifs à base d'arbre de décision utilisent une méthode de groupage pour traiter les attributs symboliques, de façon à lutter contre la fragmentation des données.

La gestion des modalités d'une variable symbolique est un problème plus général dont les enjeux dépassent largement le cadre des arbres de décision. Par exemple, les méthodes à base de réseaux de neurones n'utilisant que des données numériques ont souvent recours à un codage disjonctif complet des variables symboliques. Dans le cas où les modalités sont trop nombreuses, il est nécessaire de procéder en préalable à des groupages de modalités. Ce problème se rencontre également dans le cas des réseaux bayesiens.

L'enjeu du regroupement des modalités est de trouver une partition réalisant un compromis entre qualité informationnelle (groupes homogènes vis-à-vis de l'attribut source à prédire) et qualité statistique (effectifs suffisant pour assurer une généralisation efficace). Ainsi, le cas extrême d'un attribut ayant autant de modalités que d'individus est inutilisable : tout regroupement des modalités correspond à un apprentissage « par coeur » inutilisable en généralisation. Dans l'autre cas extrême d'un attribut possédant une seule modalité, la capacité en généralisation est optimale, mais l'attribut ne possède aucune information permettant de séparer les classes à prédire. Il s'agit alors de trouver un critère mathématique permettant d'évaluer et de comparer des partitions de taille différentes, et un algorithme conduisant trouver la meilleure partition.

La méthode groupage selon la présente invention utilise la valeur globale du $\chi^2$ du tableau de contingence entre attribut discrétisé (attribut source) et attribut à prédire (attribut cible), et cherche à minimiser la probabilité P d'indépendance correspondante. La méthode de groupage commence par le partionnement des modalités initiales puis évalue toutes les fusions possibles et choisit enfin celle qui maximise le critère du $\chi^2$ appliqué à la nouvelle partition formée. La méthode s'arrête automatiquement dès que la probabilité d'indépendance P ne décroît plus. Cette partie de la méthode est identique à celle qui est décrite dans le document FR-A-2 825 168. De plus, la méthode de groupage selon la présente invention est similaire à la méthode de discrétisation décrite ci-dessus en y apportant le même perfectionnement. Elle permet un contrôle réel de la qualité prédictive d'un groupage de modalités.

A l'instar de la méthode de discrétisation décrite ci-dessus, elle repose sur l'étude du comportement statistique de l'algorithme en présence d'un attribut symbolique indépendant de l'attribut à prédire. On a donc étudié la statistique de la variation maximale du critère du $\chi^2$ lors du déroulement complet de l'algorithme de groupage. Cette étude a montré que cette valeur maximale $Max\Delta\chi^2$ ne dépend que du nombre de modalités des attributs sources et cibles et est insensible à la répartition de ces modalités ainsi qu'à la taille de l'échantillon d'apprentissage. Suite à la modélisation de la statistique du $Max\Delta\chi^2$, on a alors modifié l'algorithme de groupage initial en le contraignant à accepter toute fusion de modalités entraînant une variation du $\chi^2$ inférieure à la variation théorique maximale calculée $Max\Delta\chi^2$.

La présente invention permet de garantir, d'une part, que les groupages de modalité d'un attribut indépendant de l'attribut à prédire aboutissent à un seul groupe terminal et, d'autre part, que les groupages aboutissant à plusieurs groupes correspondent à des attributs ayant un intérêt prédictif réel. Des expérimentations confirment l'intérêt de cette version robuste de l'algorithme et montrent de bonnes performances prédictives pour les groupages obtenus.

La méthode de discrétisation qui a été décrite précédemment se généralise au groupage en remplaçant les intervalles par des groupes de modalités et en remplaçant la recherche de la meilleure fusion d'intervalles adjacents par la recherche de la meilleure fusion de groupes quelconques.

La contrainte d'effectif minimum se traduit ici par un effectif minimum par modalité. Lors d'un pré-traitement, toute modalité source n'atteignant pas cet effectif minimum sera groupée inconditionnellement en une modalité spéciale autre prévue à cet effet. Ainsi, il ne reste alors que des modalités qui satisfont la contrainte d'effectif minimum en entrée de la méthode de groupage.

De façon analogue à la méthode de discrétisation précédemment décrite, il est possible de ramener l'algorithme de groupage à une complexité algorithmique de Nlog(N)+$J^2$log(J) ou N est le nombre d'individus de l'échantillon et J est le nombre de modalités de l'attribut source (une fois la modalité spéciale autre traitée).

L'organigramme de la méthode de groupage selon la présente invention est identique à celui de la méthode de discrétisation décrite ci-dessus en relation avec la Fig. 2.

On va maintenant cherché à exprimer la valeur du $Max\Delta\chi^2$ dans le cadre d'une méthode de groupage.

Lors de la mise en oeuvre de la méthode de groupage selon l'invention telle qu'illustrée à la Fig. 2, on envisage toutes les fusions possibles de lignes du tableau de contingence et on choisit celle qui maximise la valeur du $\chi^2$ du tableau de contingence après fusion des lignes, c'est-à-dire celle qui maximise la variation $\Delta\chi^2$ au cours de la fusion.

On considère que la valeur $Max\Delta\chi^2$ est la valeur maximale du $\Delta\chi^2$ qui sera atteinte lors de la mise en oeuvre de la méthode selon la présente invention, valeur obtenue jusqu'à l'obtention d'un unique groupe de modalités terminal.

Ainsi, le principe de base de la méthode de la présente invention est de constater que pour un attribut source indépendant de l'attribut à prédire, on observera naturellement des variations du $\Delta\chi^2$ et donc un $Max\Delta\chi^2$ dû au hasard de l'échantillon. Mais en définitive, le groupage des modalités d'un attribut indépendant de l'attribut à prédire devrait aboutir à un seul groupe terminal. Par conséquent, on impose que toute fusion de groupe entraînant une variation du $\chi^2$ inférieure aux variations pouvant être dues au hasard (c'est-à-dire inférieure au $\text{Max}\Delta\chi^2$) soit automatiquement acceptée. On assure ainsi également que tout groupage aboutissant à au moins deux groupes terminaux correspond à un attribut non indépendant de l'attribut à prédire.

On va maintenant cherché à établir la statistique du $\text{Max}\Delta\chi^2$ dans le cas du traitement du groupage de modalités d'attributs.

Soit N la taille de l'échantillon, I le nombre de modalités sources et J le nombre de modalités cibles.

On notera que, pour des raisons déjà expliquées ci-dessus, l'on se place dans le cas où la contrainte d'effectif minimum de 5 par cellule du tableau de contingence est respectée, de façon à pouvoir utiliser valablement la statistique du $\chi^2$.

A priori, la statistique du $\text{Max}\Delta\chi^2$ dépend de la taille de l'échantillon N, du nombre de modalités de l'attribut source I, du nombre de modalités de l'attribut J mais aussi de la répartition des fréquences des modalités sources et de la répartition des fréquences des modalités cibles.

En fait, on a pu démontrer que la loi du $\text{Max}\Delta\chi^2$ ne dépend en réalité que du nombre de modalités de l'attribut source I et de l'attribut cible J. On a également pu démontrer que pour 2 modalités sources, la loi du $\text{Max}\Delta\chi^2$ est la loi du $\chi^2$ à J-1 degrés de libertés. Sa moyenne est donc J-1.

De plus, pour 2 modalités cibles, on a encore pu démontré que la moyenne du $\text{Max}\Delta\chi^2$ est asymptotiquement proportionnelle à $2I/\pi$.

On a décrit jusqu'ici une méthode de discrétisation d'un attribut source dont les modalités continues sont mono-dimensionnelles mais on comprendra que la présente invention est également applicable à une méthode de discrétisation d'un attribut source dont les modalités également continues sont de dimensions k.

Dans ce cas, l'attribut source est un attribut source numérique de dimensions k formé par k attributs sources mono-dimensionnels. Chaque individu de la population peut être représenté par un point de l'espace desdits attributs de dimension k.

Cette méthode de discrétisation en dimension k d'un groupe de k attributs sources consiste donc à faire une partition des modalités du groupe des k attributs sources en des régions élémentaires de dimension k et une évaluation pour chaque couple de régions élémentaires adjacentes, la valeur du $\chi^2$ du tableau de contingence après une éventuelle fusion dudit couple.

On notera que les régions élémentaires en question sont par exemple des cellules de Voronoï de l'espace des attributs sources. Pour trouver deux régions élémentaires adjacentes, on construit le graphe de Delaunay associé aux cellules de Voronoï et l'on élimine de ce graphe tout arc joignant deux cellules voisines en passant par une troisième, les couples de régions adjacentes étant donnés par les arcs du graphe de Delaunay après l'étape d'élimination.

On pourra utilement se reporter au document de brevet FR-A-2 825 168 pour des détails concernant ces étapes de partition et d'évaluation.

Ensuite, on effectue la fusion, parmi l'ensemble des couples de régions fusionnables, du couple de régions dont la fusion maximise la valeur de $\chi^2$ et on arrête la méthode lorsqu'il n'existe pas d'ensemble d'intervalles permettant de diminuer la probabilité d'indépendance. Si tel n'est pas le cas, on réitère les étapes précédentes.

Selon une caractéristique de la présente invention, la méthode de discrétisation en dimension k d'un groupe de k attributs sources est caractérisée en ce qu'elle comprend en outre une étape de saut direct à partir de d'étape de fusion après l'étape d'arrêt tant que la valeur $\Delta\chi^2$ de la variation de la valeur du $\chi^2$ avant et après fusion est, en valeur absolue, inférieure à une valeur seuil prédéterminée $\text{Max}\Delta\chi^2$.

De même, la méthode qui vient d'être décrite est également applicable au groupage en dimension k d'un groupe de k attributs sources discrets. Comme précédemment, elle consiste alors à faire une partition desdites modalités du groupe des k attributs source en une pluralité de groupes et une évaluation pour chaque couple de groupes, la valeur du $\chi^2$ du tableau de contingence après une éventuelle fusion dudit couple.

Elle consiste à faire la fusion, parmi l'ensemble des couples de groupes fusionnables, du couple de groupes dont la fusion maximise la valeur de $\chi^2$ et à arrêter la méthode s'il n'existe pas de fusions de groupes permettant de diminuer la probabilité d'indépendance, sinon on réitère les étapes précédentes.

Cette méthode de groupage comprend en outre une étape de saut direct à l'étape de réitération tant que la valeur $\Delta\chi^2$ de la variation de la valeur du $\chi^2$ avant et après fusion est, en valeur absolue, inférieure à une valeur seuil prédéterminée $\text{Max}\Delta\chi^2$.

On rappelle que de manière tout à fait général, la présente invention concerne une méthode de discrétisation/groupage d'un attribut source ou d'un groupe attributs source d'une base de données contenant une population d'individus dans le but notamment de prédire des modalités d'un attribut cible donné.

Si l'on se réfère à la Fig. unique, les étapes de partition desdites modalités dudit attribut source ou dudit groupe d'attribut en régions élémentaires, d'évaluation pour chaque couple de régions élémentaires, de la valeur après une éventuelle fusion dudit couple d'un critère de fusion, et de recherche, parmi l'ensemble des couples de régions élémentaires fusionnables, du couple de régions élémentaires dont le critère de fusion serait optimisée correspondant aux étapes 100, 110, 120 et 130.

L'étape d'arrêt de la méthode s'il n'existe pas de régions élémentaires dont la fusion aurait pour conséquence d'améliorer le critère de fusion est l'étape 150.

L'étape de fusion et réitération est représentée par la boucle incluant 160, 170, 180 et 185.

L'étape de saut direct tant que la valeur de la variable d'appréciation de la fusion n'est pas comprise dans une zone de valeurs atypiques prédéterminée est l'étape 210.

Enfin, l'étape de détermination de la zone de valeurs atypiques prédéterminée est l'étape 200.

**Revendications**

1. Méthode de discrétisation/groupage d'un attribut source ou d'un groupe attributs source d'une base de données contenant une population d'individus dans le but notamment de prédire des modalités d'un attribut cible donné, ladite méthode comportant les étapes suivantes de :

   a) Partition desdites modalités dudit attribut source ou dudit groupe d'attribut en régions élémentaires,
   b) Evaluation pour chaque couple de régions élémentaires, d'un critère de fusion,
   c) Recherche, parmi l'ensemble des couples de régions élémentaires fusionnables, du couple de régions élémentaires dont le critère de fusion serait optimisée,
   e) Arrêt de la méthode s'il n'existe pas de régions élémentaires dont la fusion aurait pour conséquence d'améliorer ledit critère de fusion,
   f) sinon fusion et réitération des étapes b) à e),

   **caractérisée en ce qu'**elle comprend en outre une étape d) entre les étapes c) et e) de saut direct à l'étape f) tant que la valeur d'une variable d'appréciation de la fusion considérée, ladite variable d'appréciation caractérisant le comportement dudit critère de fusion, n'est pas comprise dans une zone de valeurs atypiques prédéterminée.

2. Méthode de discrétisation/groupage d'un attribut source ou d'un groupe attributs source selon la revendication 1, **caractérisée en ce que** ladite zone de valeurs atypiques prédéterminée est telle que pour un attribut cible indépendant dudit attribut source ou dudit groupe attributs source, la valeur de ladite variable d'appréciation de la fusion considérée ne soit pas comprise dans ladite zone avec une probabilité p prédéterminée.

3. Méthode de discrétisation d'un attribut source d'une base de données contenant une population d'individus dans le but notamment de prédire des modalités d'un attribut cible donné, ladite méthode comportant les étapes suivantes de :

   a) Partition desdites modalités de l'attribut source en intervalles élémentaires deux à deux adjacents,
   b) Evaluation pour chaque couple d'intervalles élémentaires adjacents dudit ensemble, la valeur du $\chi^2$ du tableau de contingence après une éventuelle fusion dudit couple,
   c) Recherche, parmi l'ensemble des couples d'intervalles élémentaires fusionnables, du couple d'intervalles élémentaires dont la fusion maximiserait la valeur de $\chi^2$,
   e) Arrêt de la méthode s'il n'existe pas d'intervalles élémentaires permettant de diminuer la probabilité d'indépendance,
   f) sinon fusion et réitération des étapes b) à e),

   **caractérisée en ce qu'**elle comprend en outre une étape d) entre les étapes c) et e) de saut direct à l'étape f tant que la valeur $\Delta\chi^2$ de la variation de la valeur du $\chi^2$ avant et après fusion est, en valeur absolue, inférieure à une valeur seuil prédéterminée Max$\Delta\chi^2$.

4. Méthode de discrétisation selon la revendication 3, **caractérisée en ce que** ladite valeur seuil prédéterminée Max$\Delta\chi^2$ est telle que pour un attribut cible indépendant de l'attribut source la valeur $\Delta\chi^2$ de la variation de la valeur du $\chi^2$ avant et après fusion soit toujours inférieure à ladite valeur Max$\Delta\chi^2$ avec une probabilité p prédéterminée.

5. Méthode de discrétisation selon la revendication 4, **caractérisée en ce que** ladite valeur seuil prédéterminée Max$\Delta\chi^2$ est égale à la fonction du $\chi^2$ de degré de liberté égale au nombre J de modalités de l'attribut cible moins un pour une probabilité p à la puissance 1/N où N est la taille de l'échantillon de la partie de la base de données sur laquelle est appliquée ladite méthode de discrétisation :

$$Max\Delta\chi^2 = Inv\chi^2_{J-1}(p^{1/N})$$

où *Inv*$\chi^2$ est la fonction qui donne la valeur du $\chi^2$ en fonction d'une probabilité p donnée.

6. Méthode de discrétisation d'un attribut source selon une des revendications 3 à 5, **caractérisée en ce qu'**elle comporte une étape de vérification que l'effectif d'un attribut source pour des modalités dans un intervalle donné pour chaque attribut cible est supérieur à une valeur prédéterminée, et si tel n'est pas le cas, mettre en oeuvre la fusion dudit intervalle avec un intervalle adjacent.

7. Méthode de groupage d'un attribut de source d'une base de données contenant une population d'individus dans le but notamment de prédire des modalités d'un attribut cible donné, ladite méthode comportant les étapes suivantes de :

   a) Partition desdites modalités de l'attribut source en une pluralité de groupes,
   b) Evaluation pour chaque couple de groupes dudit ensemble, la valeur du $\chi^2$ du tableau de contingence après une éventuelle fusion dudit couple,
   c) Recherche, parmi l'ensemble des couples de groupes fusionnables, du couple de groupes dont la fusion maximiserait la valeur de $\chi^2$,
   e) Arrêt de la méthode s'il n'existe pas de fusions de groupes permettant de diminuer la probabilité d'indépendance,
   f) sinon fusion et réitération des étapes b) à e),

   **caractérisée en ce qu'**elle comprend en outre une étape d) entre les étapes c) et e) de saut direct à l'étape f) tant que la valeur $\Delta\chi^2$ de la variation de la valeur du $\chi^2$ avant et après fusion est, en valeur absolue, inférieure à une valeur seuil prédéterminée Max$\Delta\chi^2$.

8. Méthode de groupage selon la revendication 7, **caractérisée en ce que** ladite valeur seuil prédéterminée Max$\Delta\chi^2$ est telle que pour un attribut cible indépendant de l'attribut source la valeur $\Delta\chi^2$ de la variation de la valeur du $\chi^2$ avant et après fusion soit toujours inférieure à ladite valeur Max$\Delta\chi^2$ avec une probabilité p prédéterminée.

9. Méthode de groupage selon la revendication 7, **caractérisée en ce que** pour établir la valeur seuil prédéterminée Max$\Delta\chi^2$, elle consiste à utiliser une table de valeurs préalablement calculée de valeurs de moyenne et d'écart type en fonction du nombre de modalités de l'attribut source et du nombre de modalités des attributs cibles, à déterminer par interpolation linéaire à partir de ladite table de valeurs la moyenne et l'écart type du Max$\Delta\chi^2$ correspondant aux attributs à grouper, puis à déterminer en utilisant la loi normale inverse la valeur seuil prédéterminée Max$\Delta\chi^2$ correspondant qui ne sera pas avec une probabilité p.

10. Méthode de groupage selon la revendication 9, **caractérisée en ce que** pour deux modalités cibles, la moyenne du Max$\Delta\chi^2$ est asymptotiquement proportionnelle à $2I/\pi$ où I est le nombre de modalités sources.

11. Méthode de groupage selon la revendication 10, **caractérisée en ce que** pour deux modalités sources, la loi du Max$\Delta\chi^2$ est la loi du $\chi^2$ à J-1 degrés de liberté, J étant le nombre de modalités cibles.

12. Méthode de groupage d'un attribut source selon une des revendications précédentes 7 à 11, **caractérisée en ce qu'**elle comporte une étape préalable de vérification que l'effectif d'un attribut source pour des modalités dans un groupe donné pour chaque attribut cible est supérieur à une valeur prédéterminée, et si tel n'est pas le cas, mettre en oeuvre une fusion dudit groupe avec un groupe spécifique, ledit groupe fusionné formant alors de nouveau ledit groupe spécifique.

13. Méthode de discrétisation en dimension k d'un groupe de k attributs sources continus d'une base de données contenant une population d'individus, dans le but notamment de prédire les modalités d'un attribut cible donné, ladite méthode comportant les étapes suivantes de :

   a) Partition desdites modalités du groupe des k attributs sources en des régions élémentaires de dimension k,
   b) Evaluation pour chaque couple de régions élémentaires adjacentes, la valeur du $\chi^2$ du tableau de contingence après une éventuelle fusion dudit couple,
   c) Recherche, parmi l'ensemble des couples de régions fusionnables, du couple de régions dont la fusion maximiserait la valeur de $\chi^2$,

e) Arrêt de la méthode s'il n'existe pas d'ensemble d'intervalles permettant de diminuer la probabilité d'indépendance,

f) sinon fusion et réitération des étapes b) à e),

**caractérisée en ce qu'**elle comprend en outre une étape d) entre les étapes c) et e) de saut direct à l'étape f) tant que la valeur $\Delta\chi^2$ de la variation de la valeur du $\chi^2$ avant et après fusion est, en valeur absolue, inférieure à une valeur seuil prédéterminée Max$\Delta\chi^2$.

**14.** Méthode de groupage en dimension k d'un groupe de k attributs sources discrets d'une base de données contenant une population d'individus, dans le but notamment de prédire les modalités d'un attribut cible donné, ladite méthode comportant les étapes suivantes de :

a) Partition desdites modalités du groupe des k attributs source en une pluralité de groupes,

b) Evaluation pour chaque couple de groupes, la valeur du $\chi^2$ du tableau de contingence après une éventuelle fusion dudit couple,

c) Recherche, parmi l'ensemble des couples de groupes fusionnables, du couple de groupes dont la fusion maximiserait la valeur de $\chi^2$,

e) Arrêt de la méthode s'il n'existe pas de fusions de groupes permettant de diminuer la probabilité d'indépendance,

f) sinon réitération des étapes b) à e),

**caractérisée en ce qu'**elle comprend en outre une étape d) entre les étapes c) et e) de saut direct à l'étape f) tant que la valeur $\Delta\chi^2$ de la variation de la valeur du $\chi^2$ avant et après fusion est, en valeur absolue, inférieure à une valeur seuil prédéterminée Max$\Delta\chi^2$.

**Fig. unique**

EP 1 431 880 A1

Office européen des brevets

**RAPPORT DE RECHERCHE EUROPEENNE**

Numéro de la demande

EP 03 29 3122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | M.R. CHMIELEWSKI, J.W. GRZYMALA-BUSSE: "Global Discretization of Continuous Attributes as Preprocessing for Machine Learning" INTERNATIONAL JOURNAL OF APPROXIMATE REASONING, vol. 15, no. 4, novembre 1996 (1996-11), pages 319-331, XP002272180 * page 320, ligne 26-32 * * page 322, ligne 26 – page 323, ligne 6 * * page 324, ligne 17 – page 327, ligne 26 * | 1,2 | G06F17/18 |
| P,X | MARC BOULLÉ: "Khiops: A Discretization Method of Continuous Attributes with Guaranteed Resistance to Noise" MACHINE LEARNING AND DATA MINING IN PATTERN RECOGNITION, THIRD INTERNATIONAL CONFERENCE, MLDM 2003, LEIPZIG, GERMANY, JULY 5-7, 2003, PROCEEDINGS. SPRINGER, ISBN 3-540-40504-6, LNCS, vol. 2734, janvier 2003 (2003-01), pages 50-64, XP002255731 * page 50-57 * | 1-14 | |
| D,A | FR 2 825 168 A (FRANCE TELECOM) 29 novembre 2002 (2002-11-29) * revendications 1,2,8-10 * | 1-14 | |

DOMAINES TECHNIQUES RECHERCHES (Int.Cl.7)

G06F

-/--

Le présent rapport a été établi pour toutes les revendications

| Lieu de la recherche | Date d'achèvement de la recherche | Examinateur |
|---|---|---|
| LA HAYE | 2 mars 2004 | Bykowski, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EP 1 431 880 A1

# RAPPORT DE RECHERCHE EUROPEENNE

Office européen
des brevets

Numéro de la demande

EP 03 29 3122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | KERBER R: "CHIMERGE: DISCRETIZATION OF NUMERIC ATTRIBUTES" PROCEEDINGS AAAI, NATIONAL CONFERENCE ON ARTIFICIAL INTELLIGENCE, XX, XX, 12 juillet 1992 (1992-07-12), pages 123-128, XP008005440 * page 124, colonne de droite - page 125, colonne de gauche * * page 126, colonne de droite - page 127, colonne de gauche * | 1-14 | |
| A | LIU HUAN ET AL: "Chi2: feature selection and discretization of numeric attributes" PROCEEDINGS OF THE 7TH INTERNATIONAL CONFERENCE ON TOOLS WITH ARTIFICIAL INTELLIGENCE. HERNDON, VA., NOV. 5 - 8, 1995, PROCEEDINGS OF THE INTERNATIONAL CONFERENCE ON TOOLS WITH ARTIFICIAL INTELLIGENCE, LOS ALAMITOS, CA: IEEE COMPUTER SOC, US, 5 novembre 1995 (1995-11-05), pages 388-391, XP002204465 ISBN: 0-8186-7312-5 * page 388, colonne de droite, ligne 6 - page 389, colonne de droite, alinéa 3 * | 1-14 | DOMAINES TECHNIQUES RECHERCHES (Int.Cl.7) |
| A | BAY S D: "Multivariate discretization for set mining" KNOWLEDGE AND INFORMATION SYSTEMS, SPRINGER VERLAG,LONDON, GB, vol. 3, no. 4, novembre 2001 (2001-11), pages 491-512, XP002204468 ISSN: 0219-1377 * page 5, alinéa 5 - page 8, alinéa 7 * | 13,14 | |

-/--

Le présent rapport a été établi pour toutes les revendications

| Lieu de la recherche | Date d'achèvement de la recherche | Examinateur |
|---|---|---|
| LA HAYE | 2 mars 2004 | Bykowski, A |

20

| | Office européen des brevets | RAPPORT DE RECHERCHE EUROPEENNE | Numéro de la demande EP 03 29 3122 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | KE WANG, BING LIU: "Concurrent Discretization of Multiple Attributes" PRICAI'98, 5TH PACIFIC RIM INTERNATIONAL CONFERENCE ON ARTIFICIAL INTELLIGENCE, LNCS, vol. 1531, 22 - 27 novembre 1998, pages 250-259, XP002255732 Singapore * Section 2 * * page 252, dernier alinéa - page 254, alinéa 4 * ----- | 1-14 | |
| | | | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 2 mars 2004 | Bykowski, A |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 03 29 3122

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

02-03-2004

| Document brevet cité au rapport de recherche | Date de publication | Membre(s) de la famille de brevet(s) | Date de publication |
|---|---|---|---|
| FR 2825168 A | 29-11-2002 | FR 2825168 A1<br>EP 1389325 A2<br>WO 02095620 A2 | 29-11-2002<br>18-02-2004<br>28-11-2002 |

EPO FORM P0460

Pour tout renseignement concernant cette annexe : voir Journal Officiel de l'Office européen des brevets, No.12/82